Europäisches Patentamt

European Patent Office

Office européen des brevets

(19)

(11) Veröffentlichungsnummer: **0 147 614**
**B1**

(12) **EUROPÄISCHE PATENTSCHRIFT**

(45) Veröffentlichungstag der Patentschrift: **01.08.90**

(21) Anmeldenummer: **84113967.8**

(22) Anmeldetag: **19.11.84**

(51) Int. Cl.⁵: **G 01 L 9/00, G 01 L 9/08**

(54) **Druckaufnehmer mit Sensorquarz.**

(30) Priorität: **17.12.83 DE 3345750**

(43) Veröffentlichungstag der Anmeldung:
**10.07.85 Patentblatt 85/28**

(45) Bekanntmachung des Hinweises auf die
Patenterteilung:
**01.08.90 Patentblatt 90/31**

(84) Benannte Vertragsstaaten:
**DE FR GB IT**

(56) Entgegenhaltungen:
**DE-A-2 700 902**
**DE-A-2 941 108**
**US-A-4 126 801**

(73) Patentinhaber: **ROBERT BOSCH GMBH**
**Postfach 50**
**D-7000 Stuttgart 1 (DE)**

(72) Erfinder: **Boruschewitz, Manfred, Dipl.-Ing.**
**Müllenhoffstrasse 6**
**D-1000 Berlin 61 (DE)**
Erfinder: **Bosse, Jürgen, Dipl.-Ing.**
**Ernst-Abbé-Strasse 32**
**D-3200 Hildesheim (DE)**
Erfinder: **Hamisch, Hansjoachim, Dr.**
**Stendelweg 49**
**D-1000 Berlin 19 (DE)**
Erfinder: **Kaiser, Hans-Jürgen, Dipl.-Phys.**
**Ahornallee 50**
**D-1000 Berlin 19 (DE)**
Erfinder: **Timm, Horst, Dipl.-Ing.**
**Ulmenweg 31**
**D-3200 Hildesheim (DE)**

Courier Press, Leamington Spa, England.

## Beschreibung

Die Erfindung betrifft einen Druckaufnehmer mit Sensorquarz nach dem Anspruch 1 sowie ein Justierverfahren und Vorrichtung — Ansprüche 16, 20.

Sensoquarze, insbesondere Schwingquarzplatten im AT-Schnitt, die einer radialen mechanischen Kraft ausgesetzt werden, erfahren eine der Kraft proportionale Änderung ihrer Eigenfrequenz. Die Vorzüge einer hierauf beruhenden Kraftmessung — gute Linearität, geringe Hysterese, weiter Arbeitstemperaturbereich und hohe zeitliche Konstanz dieser Eigenschaften, frequenzanaloges Signal — werden auch für die Druckmessung eingesetzt, in dem eine geeignete Druck-Kraft-Wandlung vorgenommen wird. Bei den bisher auf dem Markt erschienenen Druckaufnehmern nach diesem Prinzip werden die genannten Eigenschaften mit Hilfe einer aufwendigen Konstruktion erreicht. Der dadurch bedingte hohe Preis stand einer breiten Einführung bisher entgegen.

Aus der Firmenschrift der Firma Gould Inc., Measurement Systems Division betreffend den "Quartz Resonator Pressure Transducer PA9000" ist bereits ein Druckaufnehmer mit Sensorquarz bekannt, bei dem mit Hilfe einer Membran eine Kraft auf ein Drucklager ausgeübt wird, um diese Kraft auf die Kante einer dünnen Quarzplatte einzuleiten.

Aus der US—PS 4 126 801, Corbett, ist eine Einspannung für Schwingquarzaufnehmer bekannt, wie sie in der vorhergehenden Firmenschrift Verwendung fidnet. Der Quarz hat scheibenförmige Gestalt und wird durch zwei Spannglieder mit gewölbter Oberfläche eingespannt. Problematisch as dieser Einspannung ist, daß sie sehr schlecht justierbar ist. Die freiliegenden Anschlußdrähte der Quarzelektroden sind bei der Montage hinderlich und können bei rasch wechselnden Druckbeanspruchengen zu unerwünschten Eigenschwingungen führen.

Beim Kraftmeßwandler nach der Entgegenhaltung DE—OS 27 00 902 wird ein Gehäuseoberteil und ein Gehäuseunterteil mit Hilfe von Schrauben miteinander verbunden. Im Gehäuseoberteil ist mit Hilfe von Membranen, auf die auch der zu bestimmende Druck einwirkt, das Drucklager der Schwingquarze befestigt. Der Durchmesser debeiden Schwingquarze 2, 3 muß dabei möglichst genau aufeinander abgestimmt sein. Eine Feineinstellung bei Durchmessertoleranzen der Schwingquarze ist nicht möglich.

Auch beim Druckwandler nach der DE—OS 29 41 108 wird der Schwingquarz zwischen den beiden Lagern und zugleich auch zwischen mehreren Gehäuseteilen mit Hilfe von Schrauben fixiert. Die an den Schwingquarzen angebrachten Elektroden sind mit Hilfe von Drähten mit einer Schwingschaltung gekoppelt.

## Vorteile der Erfindung

Der erfindungsgemäße Druckaufnehmer hat demgegenüber den Vorteil, daß der Rahmen eine einfache und genaue Befestigung des zweiten Drucklagers gestattet und die mit den Elektroden zugleich angebrachten Elektrodenzuführungen auf dem Sensorquarz zu den Drucklagern führen sowie zur Kontaktherstellung mit den Drucklagern um den Rand des Sensorquarzes herumgezogen sind. Das ermöglicht eine einfachere Montage, und bewirkt den Wegfall von Anschlußdrähten, so daß störende mechanische Eigenschwingungen vermieden werden.

Durch die in den Unteransprüchen aufgeführten Maßnahmen sind vorteilhafte Verbesserungen und Ausführungen des erfindungsgemäßen Druckaufnehmers möglich. Polierte, ebene Lagerflächen, auf denen vor der Montage des Sensorquarzes keine Lagerstelle durch konstrucktive Merkmale vorbestimmt ist, haben den Vorteil, daß keine besonderen Maßnahmen zur genauen Justierung der Quarlage und der Lage der kristallographischen X-Achse zur Kraftrichtung beim einzelnen Druckaufnehmer notwendig sind. Dadurch wird eine wesentliche Kostenreduzierung erreicht. Daß das Gegenlager im Rahmen axial verschiebbar und arretierbar ist, ermöglicht die Justierung des Sensorquarzes, ohne die Drucklagerflächen vor dem Erreichen der endgültigen Lage zu berühren. Damit werden Deformationen der Lagerflächen in der Umgebung der endgültigen Position des Sensorquarzes vermieden, die zu unerwünschten Spannungskomponenten im Sensorquarz führen würden. Durch die axiale Verschiebung des Gegenlagers wird die Einstellung der mechanischen Vorspannung des Sensorquarzes in denkbar einfacher Weise ermöglicht. Eine Markierung der kristallographischen X-Richtung am Rand des Sensorquarzes ermöglicht die Einstellung des gewünschten Winkels zwischen kristallographischer X-Achse und Kraftrichtung. Ein halbkreisförmiges Sensorquarzrandprofil ermöglicht eine Konzentration der Kraftbelastung um die Quarzplatten-Mittelebene. Damit wird eine Verteilung der Belastung auf im wesentlichen zwei Kraft-Linien vermieden, die zu Scherbelastungen im Auflagebereich und zu ungleichmäßiger Kraftverteilung führen können. Die Oberfläche des harten Lagermaterials mit einer dünnen, weichen metallischen Schicht (vorzugsweise Gold oder Kupfer einige Mikrometer dick) reduziert die Anforderungen an die Homogenität des Lagermaterials und an die Bearbeitung des Quarzplattenrandes. Damit wird außerdem die Auslösung von Zwillingsbildung innerhalb der Kristallstruktur vermieden. Die elektrische Verbindung des elektrisch isolierten Gegenlagers mit der Glasdurchführung des Gehäuses mit einem dünnen federnden Stift hat den Vorteil, daß eine zu starke mechanische Kopplung des Druckaufnehmerrahmens mit dem Gehäuse vermieden wird, die unerwünschte Schwingungen auf den Sensorquarz übertragen könnte. Von weiterem Vorteil ist die einfache Montage. Die drei Millibar Stickstoffüllung des Gehäuses anstelle einer Vakuumleerung verbessert die thermische Ankopplung der Quarzplatten an die umgebenden Bauteile durch Wärmelei-

2

tung, ohne daß die Eigenerwärmung des Füllgases in Betracht gezogen werden muß.

Zeichnung

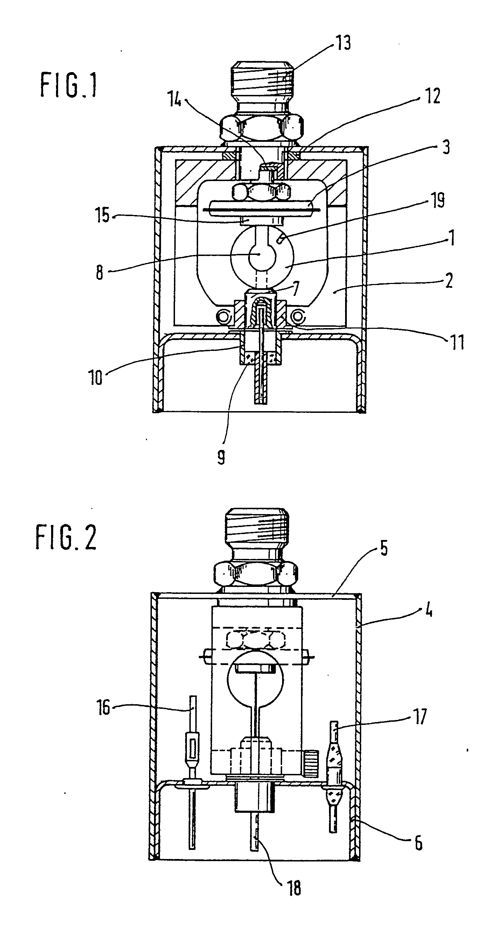

Ein ausführungsbeispiel der Erfindung ist in der Zeichnung dargestellt und in der nachfolgenden Beschreibung näher erläutert. Figur 1 zeigt einen Schnitt durch den erfindungsgemäßen Druckaufnehmer. Figur 2 zeigt eine Seitenansicht eines Schnittes gemäß Figur 1.

Beschriebung des Ausführungsbeispieles

Ein Sensorquarz 1 mit zwei Elektroden 8 ist zwischen einem Drucklager 15 und einem Gegenlager 7 eingespannt. Das Drucklager 15 ist an einer Druckdose 3 befestigt, die in einen Rahmen 2 eingeschraubt ist. Das Gegenlager 7 ist in eine Isolierbuchse 11 eingepaßt, die über einen Luftspalt einer Glasdurchführung 10 gegenüberliegt, welche in einen Gehäuseboden 6 eingepaßt ist. Ein dünner Kontaktstift 18 ist in eine Kontakthülse in das Gegenlager 7 eingesteckt und führt durch ein Isolierstück 9 durch die Glasdurchführung 10 nach außen, wobei der Kontaktstift 18 in einem Durchführungsrohr eingelötet ist. Der Gehäuseboden 6 ist in einen Gehäusezylinder 4 eingeschweißt, dem ein Gehäusedeckel 5 aufgeschweißt ist. Eine Rohrverschraubung 13 führt durch den Gehäusedeckel 5 und ist in den oberen Teil des Rahmens 2 eingeschraubt. Zwischen Gehäusedeckel 5 und Rahmen 2 liegt eine Distanzscheibe 12. Die Innenbohrung der Rohrverschraubung 13 führt in die Arbeitskammer der Druckdose 3, die mit einem Innengewinde der Rohrverschraubung 13 verschraubt ist. Die Verbindungsstelle zwischen Verschraubung der Druckdose 3 und der Rohrverschraubung 13 ist mit einem Kupferdichtring 14 abgedichtet. Im Gehäuseboden 6 sind Anschlüsse eines Referenzquares 16, der im Gehäuseinneren sitzt, elektrisch gegen das Gehäuse isoliert nach außen geführt. Ebenfalls ist durch den Gehäuseboden 6 ein Evakuierungsrohr 17 nach außen geführt.

Der Sensorquarz 1 ist senkrecht freistehend zwischen Gegenlager 7 und Drucklager 15 eingespannt, wobei die mechanische Vorspannung durch die Druckdose 3 bewirkt wird. Ein Überdruck, der durch die Innenbohrung der Rohrverschraubung 13 in die Arbeitskammer der Druckdose 3 gelangt, führt über eine Druck-Kraft-Wandlung durch die Druckdose 3 und das Drucklager 15 zu einer Kraft auf den Sensorquarz 1. Beim Sensorquarz 1 handelt es sich um einen handelsüblichen Dickenscherschwinger mit niedrigen Kosten, hoher Druckempfindlichkeit, hoher mechanischer Festigkeit, günstigen elektrischen Schaltungseigenschaften, d.h. niedrigem Schwingwiderstand und guten Zieheigenschaften, sowie reproduzierbar einstellbarem Frequenz-Temperatur-Verhalten. Dazu ist der Sensorquarz 1 aus einer kommerziell erhältlichen 0,6 mm dicken quadratischen Quarz-Rohplatte, die auf 12 mm Durchmesser rundiert wird, hergestellt. Die elektrische Anregung als Schwingquarz erfolgt im dritten Oberton bei einer Grundfrequenz von 5 MHz.

Die kristallographische X-Achse des Sensorquarzes 1 wird vor dem Aufbringen der Elektroden 8 unter einem Polarisationsmikroskop nach einem bekannten Verfahren bestimmt, und es wird eine Markierung 19 der X-Richtung am Plattenrand des Sensorquarzes 1 angebracht. Die Elektroden 8 werden unter einem Winkel von 38° zur kristallographischen X-Richtung beidseitig des Sensorquarzes 1 so aufgedampft, daß die Elektroden jeweils um einen Rand der Quarzplatte herumreichen, so daß bei senkrechter Aufstellung des Sensorquarzes 1 die eine Elektrode zum Drucklager 15 führt und die andere, gegenüberliegende Elektrode zum Gegenlager 7, wie es in Figur 1 ersichtlich ist. Hierdurch entfallen störende Anschlußdrähte und nachträgliche Kontakterungsmittel wie Leitpaste oder Leitkleber, d.h. der Sensorquarz 1 ist sofort nach seiner Einspannung betriebsbereit. Ein elektrischer Anschluß erfolgt damit über das Drucklager 15, die Druckdose 3, den Rahmen 2, Rohrverschraubung 13 und Gehäuseteile 4, 5, 6. Der andere elektrische Anschluß geht über das Gegenlager 7 und den Kontaktstift 18. Über die Isolierbuchse 11 und das Isolierstück 9 ist das Gegenlager 7 sowie der Kontaktstift 18 von der Gehäusemasse isoliert.

Der Rahmen 2 besteht aus einem Stahlrohrprofil mit einem Wärmeausdehnungskoeffizienten, der annähernd gleich dem des Quarzmateriales des Sensorquarzes 1 ist. Hierdurch bleibt die durch die Druckdose 3 ausgeübte Vorspannung konstant und Wärmeausdehnungen werden über einen weiten Temperaturbereich kompensiert. Da im fertig montierten Zustand der Gehäuseinnenraum weitgehend evakuiert ist und sich keine aggressiven Medien bilden, kann der Rahmen 2 ohne Oberflächenbehandlung bleiben. Der untere Teil des Rahmens 2 ist bis zu seitlichen Öffnungen, wie in Figur 2 ersichtlich, geschlitzt, um dem in der ebenfalls geschlitzten Isolierbuchse 11 stehenden Gegenlager 7 durch Klemmung einen festen Sitz zu geben. Die Klemmung wird dabei durch zwei Schrauben bewerkstelligt, wie ebenfalls in Figur 2 ersichtlich ist.

Die Druckdose 3 ist mit Feingewinde in den Rahmen 2 geschraubt. Als Druck-Kraft-Wandler ist sie für 10 bar Betriebsdruck ausgelegt, und hat hierbei eine mittlere Ausdehnung von 0,025 mm/bar. Der Sensorquarz 1 ist so justiert, daß die unmittelbare Krafteinwirkung der Druckdose 3 vom Mittelpunkt des Drucklagers 15 auf die Mittelachse des Sensorquarzes 1 führt. Damit ist ein linearer Zusammenhang zwischen Kraft und Frequenzänderung des Sensorquarzes 1 erreicht. Die genaue Einstellung des Winkels von 38° zwischen der kristallographischen X-Achse und der Kraftrichtung bewirkt eine Minimum der Temperaturabhängigkeit der Druckempfindlicheit in einem vorgegebenen Temperaturbereich.

Die Rohrverschraubung 13 ist in den Gehäusedeckel 5 geschweißt, der Rahmen ist auf der anderen Seite des Gehäusedeckels auf die Rohrverschraubung 13 gegen die Distanzscheibe 12 geschraubt. Die Druckdose 3 ist in den Rahmen 2 bzw. in ein Innengewinde der Rohrverschraubung 13 verschraubt, so daß der Kupferdichtring 14 die Innenbohrung der Rohrverschraubung 13 mit dem Betriebsdruck vom Innenraum des Gehäuses abdichtet. Das Isolierstück 9 bzw. die Glasdurchführung 10 dichten den Innenraum des Gehäuses vakuumdicht ab.

Daß das Gegenlager 7 axial verschiebbar ist, führt im Gegensatz zu anderen alternativen, z.B. Schraublösungen, dazu, daß Durchmessertoleranzen des Sensorquarzes 1 unerheblich sind, daß eine einfache Aufstellung des Sensorquarzes 1 erreicht wird, daß die Vorspannung genauer eingestellt werden kann und daß ein geringeres Lagerspiel bzw. ein besserer Festsitz erreicht wird. Mit der mechanischen Vorspannung und dem Einpressen des Sensorquarzes in die Lager- bzw. Kontaktflächen von Drucklager 15 und Gegenlager 7 wird gewährleistet, daß der Sensorquarz 1 bei Vibration, Stoß und sehr kleinen Betriebsdrücken in seiner ursprünglichen Position bleibt.

Die Lagerflächen von Gegenlager 7 und Drucklager 15 sind eben, geläppt und poliert. Das Drucklager 15 ist aus Inconel 600 und das Gegenlager 7 aus geschliffenem Stahl. Die Oberflächen der harten Lagermaterialien sind mit einer dünnen, weichen metallischen Schicht aus Kupfer oder Gold (5 bis 7 Mikrometer dick) bedeckt. Das reduziert die Anforderungen an die Homogenität des Lagermaterials und an die Bearbeitung des Randes des Sensorquarzes 1.

Der Gehäusezylinder 4 besteht aus einem Rohrprofil mit einer Wanddicke von 1 mm. Für alle Gehäuseteile, also Gehäusezylinder 4, Gehäuseboden 6, Gehäusedeckel 5 ist aus Gründen der Korrosionsbeständigkeit und guter Laserschweißbarkeit Chromnickelstahl verwendet. Der Gehäuseboden 6 ist als Anschlußplatte ausgebildet und enthält Glasdurchfürungsteile für den elektrischen Anschluß des Referenzquarzes 16, des Sensorquarzes 1, sowie für das Evakuierungsrohr 17. Der hochgezogene untere Rand des Gehäusebodens 6 dient als Schutz der Glasdurchführungen und ermöglicht eine einfache Schwießung. Die Konstruktion des Gehäuses erlaubt einen einfachen Montageablauf. Der vorgefertigte Gehäuseboden 6 mit den Glasdurchführungsteilen wird zuerst mit dem Gehäusezylinder 4 und dann anschließend mit dem Gehäusedeckel 5 verschweißt. Das Zusammenfügen von Rahmentiel mit Gehäusedeckel 5 und Gehäusezylinder 4 erfolgt in einer einfachen Vorrichtung, damit der Kontaktstift 18 für den Anschluß des Sensorquarzes 1 sicher in die Kontakthülse des Gegenlagers 7 eingeführt wird. Die zu verschweißenden Teile aus Chromnickelstahl werden mit einem Laser oder Elektronenstrahl geschweißt. Dabei ergeben sich unkritische Temperaturwerte von 100° bis 250°C je nach Schweißgeschwindigkeit. Die Vakuumdichtheit der Anordung wird mit einer Helium-Leckprüfung geprüft. Nach dem Verschweißen wird das Gehäuse über das Evakuierungsrohr 17 evakuiert und anschließend Stickstoff bis zu einem Druck von 3 Millibar eingelassen. Das verbessert die thermische Ankopplung des Sensorquarzes 1 sowie des Referenzquarzes 16 an die umgebenden Bauteile.

Für die genaue Justierung des Sensorquarzes 1 auf die Mitte der Lagerstellen, der Lage der kristallographischen X-Achse und das anschließende Fixieren des Quarzes wird eine Justiervorrichtung mit zwei Mikroskopen für Höhen- und Seitenlage verwendet. Dabei wird der Rahmen 2 auf einem Montagetisch befestigt und der Sensorquarz 1 auf einer Säule mit Mittelbohrung durch Underdruck gehalten und ausgerichtet. Damit wird eine Positionierung des Sensorquarzes 1 auf das Zentrum der Drucklager 15 mit 0,01 mm Toleranz, sowie eine Enstellung der kristallographischen X-Achse auf 20 Bogenminuten Toleranz erreicht. Nach erfolgter Justierung wird durch eine Druckbelastung von 12 bar bei einer Temperatur von 150°C in die Kontaktflächen von Drucklager 15 und Gegenlager 7 durch den justierten Sensorquarz 1 einer Eindruckmarke erzeugt, und dadurch die X—Y-Position des Sensorquarzes 1 fixiert. Ein Verändern ist wegen der Eindruckmarken (bzw. Lagerbetten des Sensorquarzes 1) nicht mehr möglich.

Der erfingungsgemäße Druckaufnehmer mit Sensorquarz kann überall da Verwendung finden, wo präzise und schnelle Druckmessungen von Flüssigkeiten oder Gasen insbesondere bei hohen Drücken und Umgebungstemperaturen erforderlich sind, wie beispielsweise bei Antriebsturbinen, Gasturbinen oder Fülldruckmessungen.

**Patentansprüche**

1. Druckaufnehmer mit einem scheibenförmigen Sensorquarz (1), der auf seinem Rand stehend senkrecht eingespannt ist, mit einem ersten Drucklager (15), das zur Krafteinleitung auf den Sensorquarz (1) dient, mit einem zweiten Drucklager (7), das zur Justierung und Einspannung des Sensorquarzes (1) dient, mit einem Rahmen (2), der zur Befestigung des zweiten Drucklagers (7) dient und mit zwei Elektroden (8), die seitlich auf dem Sensorquarz (1) angebracht sind, woher die Elektroden (8) jeweils um den Rand des Sensorquarzes (1) herumgezogen sind, und eine Elektrode (8) das erste Drucklager (15) und die andere Elektrode (8) das zweite Drucklager (7) berührt, und woher das erste Drucklager (15) und das zweite Drucklager (7) voneinander elektrisch isoliert sind.

2. Druckaufnehmer nach Anspruch 1, dadurch gekennzeichnet, daß das zweite Drucklager (7) in Richtung zum Sensorquarz (1) bewegbar ist, und daß das zweite Drucklager (7) gegenüber dem Rahmen (2) im Preßsitz befestigbar ist.

3. Druckaufnehmer nach Anspruch 1 oder 2, dadurch gekennzeichnet, daß das erste Drucklager (15) an einer Druckdose (3) befestigt ist.

4. Druckaufnehmer nach Anspruch 3, dadurch gekennzeichnet, daß die Druckdose (3) über eine Rohrverschraubung (13) im Rahmen (2) befestigt ist.

5. Druckaufnehmer nach Anspruch 3 oder 4, dadurch gekennzeichnet, daß ein Kontaktstift (18) mit dem zweiten Drucklager (7) elektrisch verbunden ist, und durch eine isolierende Durchführung (10), vorzugweise aus Glaskeramik, durch einen Gehäuseboden (6) durch geführt ist.

6. Druckaufnehmer nach einem der Ansprüche 3 bis 5, dadurch gekennzeichnet, daß eine Innenbohrung der Rohrverschraubung (13) mit der Arbeitskammer der Druckdose (3) verbunden ist, und daß eine Kupferdichtring (14) die Innenbohrung der Rohrverschraubung (13) gasdicht abdichtet.

7. Druckaufnehmer nach einem der Ansprüche 3 bis 6, dadurch gekennzeichnet, daß die Druckdose (3), das erste Drucklager (15), der Sensorquarz (1), das zweite Drucklager (7) und der Rahmen (2) in einem gasdichten Gehäuse (4, 5, 6) untergebracht sind.

8. Druckaufnehmer nach Anspruch 7, dadurch gekennzeichnet, daß das Gehäuse (4, 5, 6) evakuiert ist.

9. Druckaufnehmer nach Anspruch 7, dadurch gekennzeichnet, daß das Gehäuse (4, 5, 6) mit einem Schutzgas; vorzugsweise Stickstoff, gefüllt ist.

10. Druckaufnehmer nach einem der Ansprüche 7 bis 9, dadurch gekennzeichnet, daß im Gehäuse (4, 5, 6) ein Referenzquarz (16) angebracht ist.

11. Druckaufnehmer nach einem der Ansprüche 7 bis 10, dadurch gekennzeichnet, daß im Gehäuse (4, 5, 6) ein Evakuierungsrohr (17) angebracht ist.

12. Druckaufnehmer nach einem der vorhergehenden Ansprüche, dadurch gekennzeichnet, daß die Elekroden (8) auf den Sensorquarz (1) aufgedampft sind.

13. Druckaufnehmer nach einem der vorhergehenden Ansprüche, dadurch gekennzeichnet, daß die Oberfläche wenigstens eines Drucklagers (7, 15) eben ist.

14. Druckaufnehmer nach einem der vorhergehenden Ansprüche, dadurch gekennzeichnet, daß die Oberfläche wenigstens eines Drucklagers (7, 15) mit einer weichen, metallischen Schicht, vorzugsweise aus Gold oder Kupfer, bedeckt ist.

15. Druckaufnehmer nach einem der vorhergehenden Ansprüche, dadurch gekennzeichnet, daß der Sensorquarz (1) ein kreisausschnittförmiges, vorzugweise halbkreisförmiges Randprofil besitzt.

16. Justierverfahren wobei bei einem Druckaufnehmer nach einem der borhergehenden Ansprüche der Sensorquarz (1) zwischen das erste Drucklager (15) und das zweite Drucklager (7) eingespannt wird, so daß die Kraftrichtung unter dem Kraftrichtungswinkel zur kristallographischen X-Achse des Sensorquarzes (1) von der Mitte des ersten Drucklagers (15) zur Mitte des zweiten Drucklagers (7) ausgerichtet ist.

17. Verfahren nach Anspruch 16, dadurch gekennzeichnet, daß der Sensorquarz (1) vor der Einspannung mit einer Markierung (19) versehen wird, die einen festen Bezug zur kristallographischen X-Achse des Sensorquarzes (1) hat.

18. Verfahren nach Anspruch 16 oder 17, dadurch gekennzeichnet, daß nach Ausrichtung der Kraft des Sensorquarzes (1), der Sensorquarz (1) durch eine Druckbelastung in die Oberflächen des ersten Drucklagers (15) und des zweiten Drucklagers (7) eine eindruckmarke ein Lagerbett preßt.

19. Verfahren nach Anspruch 18, dadurch gekennzeichnet, daß die Oberflächen der Drucklager (15, 7) vor der Druckbelastung keine eindruckmarken aufweisen.

20. Vorrichtung zur Durchführung des Verfahrens nach einem der Ansprüche 16 bis 19, dadurch gekennzeichnet, daß bei einem Druckaufnehmer nach einem der Ansprüche 1 bis 15 die Kraftrichtung des Sensorquarzes (1) unter einem meßmikroskop mit einem Tubus für die Höhenlage und einem Tubus für die Seitenlage des Sensorquarzes (1) ausgerichtet ist.

21. Vorrichtung nach Anspruch 20, dadurch gekennzeichnet, daß unter Tubus ein Montagetisch zur Befestigung des Rahmens (2) vorgesehen ist, so daß die Ausrichtung des Sensorquarzes optisch überwachbar ist, daß der Sensorquarz (1) auf einer Säule mit Mittelbohrung durch Underdruck gehalten und ausricht-bar ist, wobei die Säule relativ zum Montagetisch beweg-bar ist.

**Revendications**

1. Capteur de pression avec un quartz palpeur (1) en forme de disque qui est encastré par son bord en position verticale, avec une première butée par pression (15) qui sert à l'introduction de la force sur le quartz détecteur (1), avec une deuxième butée par pression (7), qui sert à l'ajustage et à l'encastrement du quartz détecteur (1), avec un cadre (2), qui sert à la fixation de la deuxième butée par pression (7) et avec deux électrodes (8) qui sont placées latéralement sur le quartz détecteur (1), les électrodes (8) étant sorties autor du bord du quartz détecteur (1) et une électrode (8) établissant le contact avec la première butée à pression (15), l'autre électrode (8) faisant contact avec la deuxième butée à pression (7) et la première butée à pression (15) ainsi que la deuximème butée à pression (7), étant isolées électriquement l'une de l'autre.

2. Capteur de pression selon la revendication 1, caractérisé en ce que la deuxième butée à pression (7) peut être déplacée en direction du quartz détecteur (1) et en ce que la deuxième butée à pression (7) peut être fixée en ajustage serré vis à vis du cadre (2).

3. Capteur de pression selon une des revendications 1 ou 2, caractérisé en ce que la première butée à pression (15) est fixée à une capsule métallique de Vidie (3).

4. Capteur de pression selon la revendication 3, caractérisé en ce que la capsule métallique (3) est fixée au cadre (2) par un raccord vissé (13).

5. Capteur de pression selon la revendications 3 ou 4, caractérisé en ce qu'une tige de contact (18) est reliée électriquement avec la deuxième butée à pression (7), et traverse un base de boîtier (6) dans un conduit isolant (10), de préférence en céramique de verre.

6. Capteur de pression selon une des revendications 3 à 5, caractérisé en ce qu'un alésage intérieur du raccord vissé (13) est en communication avec la chambre de travail de la capsule métallique (3) et en ce qu'une bague d'étanchéité en cuivre (14) étanchéifie aux gaz l'alésage intérieur du raccord vissé (13).

7. Capteur de pression suivant une des revendications 3 à 6, caractérisé en ce que la capsule métallique (3), la première butée à pression (15), le quartz détecteur (1), la deuxième butée à pression (7) et le cadre (2) sont placés dans un boîtier (4, 5, 6) étanche aux gaz.

8. Capteur de pression selon la revendication 7, caractérisé en ce que le boîtier (4, 5, 6) est mis sous vide.

9. Capteur de pression selon la revendication 7, caractérisé en ce que le boîtier (4, 5, 6) est rempli avec un gaz de protection, de préférence de l'azote.

10. Capteur de pression selon une des revendications 7 à 9, caractérisé en ce que dans le boîtier (4, 5, 6) est installé un quartz de référence (16).

11. Capteur de pression selon une des revendications 7 à 10, caractérisé en ce que dans le boîtier (4, 5, 6) est installé un tuyau pour faire le vide.

12. Capteur de pression selon une des revendications 1 à 11, caractérisé en ce que les électrodes (8) sont métallisées sur le quartz détecteur (1).

13. Capteur de pression selon une des revendications 1 à 12, caractérisé en ce que la surface d'au moins une des butées à pression (7, 15) est plane.

14. Capteur de pression selon une des revendications 1 à 13, caractérisé en ce que la surface d'au moins une butée (7, 15) est recouverte d'une couche métallique souple, de préférence en or ou cuivre.

15. Capteur de pression selon une des revendications 1 à 14, caractérisé en ce que le quartz détecteur (1) possède un profil de bord en forme de secteur circulaire, de préférence en forme de demicercle.

16. Procédé d'ajustage dans lequel, avec un capteur de pression selon une des revendications 1 à 15, le quartz détecteur (1) est encastré entre la première butée à pression (15) et la deuxième butée à pression (7), de sorte que le sens de la force est orienté, par rapport à l'angle de la direction de force avec l'axe X cristallogaphique du quartz détecteur (1), du centre de la première butée à pression (15) au centre de la dexième butée à pression (7).

17. Procédé selon la revendication 16, caractérisé en ce que le quartz détecteur (1) est muni avant insertion d'une marque (19), qui se réfère à l'axe X cristallographique.

18. Procédé selon la revendication 16 ou 17, caractérisé en ce que, selon l'orientation de la force du quartz détecteur (1), le quartz détecteur (1) par une charge de pression sur les surfaces de la première butée à pression (15) et de la deuxième butée à pression (7) effectue une empreinte sur le bâti de butéee.

19. Procédé selon la revendication 18, caractérisé en ce que les surfaces des butées à pression (15, 7) ne comportent avant la charge de pression, aucune empreinte.

20. Dispositif pour poursuite du procédé selon une des revendications 16 à 19, caractérisé en ce que, avec un capteur de pression correspondant aux revendicatiaons 1 à 15, la direction de force du quartz détecteur (1) est mise au point par un microscope de mesure avec un tube pour la position en hauteur et un tube pour la position latérale du quartz détecteur (1).

21. Dispositif selon la revendication 20, caractérisé en ce que, sous le tube, est prévue une table de montage pour fixation du cadre (2), de sorte que l'orientation du quartz détecteur (1) peut être contrôlée optiquement, et en ce que le quartz détecteur (1) est maintenu par dépression avec l'alésage central sur une colonne et est orientable, la collone pouvant être déplacée par rapport à la table de montage.

**Claims**

1. Pressure detector comprising a disc-shaped quartz sensor crystal (1) which is mounted perpendicularly standing on its margin, a first pressure support (15) which serves to introduce force to the quartz sensor crystal (1), a second pressure support (7) which serves to adjust and mount the quartz sensor crystal (1), a frame (2) which serves to fix the second pressure support (7), and two electrodes (8) which are laterally attached to the quartz sensor crystal, in which arrangement the electrodes (8) are each drawn around the margin of the quartz sensor crystal (1), and one electrode (8) touches the first pressure support (15) an the other electrode (8) touches the second pressure support (7), and in which arrangement the first pressure support (15) and the second pressure support (7) are electrically insulated from one another.

2. Pressure detector according to Claim 1, characterized in that the second pressure support (7) is movable in the direction of the quartz sensor crystal (1), and in that the second pressure support (7) can be fixed in a press fit relative to the frame (2).

3. Pressure detector according to Claim 1 or 2, characterized in that the first pressure support (15) is fixed to a pressure capsule (3).

4. Pressure detector according to Claim 3, characterized in that the pressure capsule (3) is fixed in the frame (2) via a screwed tube connection (13).

5. Pressure detector according to Claim 3 or 4, characterized in that a contact pin (18) is electrically connected to the second pressure support (7) and is fed through an insulating lead-through bushing (10), preferably made of glass ceramic, through a housing base (6).

6. Pressure detector according to any of Claims 3 to 5, characterized in that an inner bore of the screwed tube connection (13) is connected to the working chamber of the pressure capsule (3), and in that a copper sealing ring (14) seals off the inner bore of the screwed tube connection (13) gas-tight.

7. Pressure detector according to any of Claims 3 to 6, characterized in that the pressure capsule (3), the first pressure support (15), the quartz sensor crystal (1), the second pressure support (7) and the frame (2) are accommodated in a gas-tight housing (4, 5, 6).

8. Pressure detector according to Claim 7, characterized in that the housing (4, 5, 6) is evacuated.

9. Pressure detector according to Claim 7, characterized in that the housing (4, 5, 6) is filled with a protective gas, preferably nitrogen.

10. Pressure detector according to any of Claims 7 to 9, characterized in that a quartz reference crystal (16) is fitted in the housing (4, 5, 6).

11. Pressure detector according to any of Claims 7 to 10, characterized in that an evacuating tube (17) is fitted in the housing (4, 5, 6).

12. Pressure detector according to any of the preceding claims, characterized in that the electrodes (8) are vapour-deposited on the quartz sensor crystal (1).

13. Pressure detector according to any of the preceding claims, characterized in that the surface of at least one pressure support (7, 15) is flat.

14. Pressure detector according to any of the preceding claims, characterized in that the surface of at least one pressure support (7, 15) is covered with a soft, metallic coating, preferably of gold or copper.

15. Pressure detector according to any of the preceding claims, characterized in that the quartz sensor crystal (1) has a marginal profile in the shape of a sector of a circle, preferably a semicircular marginal profile.

16. Adjusting method in which, in a pressure detector according to any of the preceding claims, the quartz sensor crystal (1) is mounted between the first pressure support (15) and the second pressure support (7), so that the direction of force, at the angle of the direction of force to the crystallographic X-axis of the quartz sensor crystal (1), is orientated from the centre of the first pressure support (15) to the centre of the second pressure support (7).

17. Method according to Claim 16, characterized in that the quartz sensor crystal (1) is provided, before mounting, with a marking (19) which has a fixed reference to the crystallographic X-axis of the quartz sensor crystal (1).

18. Method according to Claims 16 or 17, characterized in that, after the force of the quartz sensor crystal (1) is orientated, the quartz sensor crystal (1), by a pressure loading, presses an impression mark [lacuna] a support bed into the surfaces of the first pressure support (15) and the second pressure support (7).

19. Method according to Claim 18, characterized in that the surfaces of the pressure supports (15, 7) have no impression marks before the impression marks before the pressure loading.

20. Device for performing the method according to any of Claims 16 to 19, characterized in that, in a pressure detector according to any of Claims 1 to 15, the direction of force of the quartz sensor crystal (1) is orientated under a measuring microscope having a tube for the vertical position and a tube for the laterial position of the quartz sensor crystal (1).

21. Device according to Claim 20, characterized in that an assembly table for fixing the frame (2) is provided under the tube, so that the orientation of the quartz sensor crystal can be optically monitored, and in that the quartz sensor crystal (1) is held by vacuum and can be orientated on a column having a centre bore, the column being movable relative to the assembly table.

FIG.1

FIG.2

1